# EUROPÄISCHE PATENTSCHRIFT

(11) **EP 2 359 016 B1**
(45) Veröffentlichungstag und Bekanntmachung des Hinweises auf die Patenterteilung: **12.08.2015**
(21) Anmeldenummer: 09806077.5
(22) Anmeldetag: 15.12.2009
(51) Int. Cl.: F16C 11/06

(54) **KUGELGELENK UND VERFAHREN ZU SEINER HERSTELLUNG**
BALL AND SOCKET JOINT AND METHOD FOR PRODUCING THE SAME
JOINT À ROTULE ET SON PROCÉDÉ DE FABRICATION

(30) Priorität: 19.12.2008 DE 102008063813
(43) Veröffentlichungstag der Anmeldung: 24.08.2011
(73) Patentinhaber: ZF Friedrichshafen AG, 88038 Friedrichshafen (DE)
(72) Erfinder: MÄHLMANN, Dirk, 49377 Vechta (DE); SCHMEINK, Frank, 49434 Neuenkirchen-Vörden (DE); ZIEBART, Benjamin, 49134 Wallenhorst (DE); POTT, Horst, 32339 Espelkamp (DE); RZICZNY, Christian, 49434 Neuenkirchen-Vörden (DE); HEUER GEN. HALLMANN, Michael, 49179 Ostercappeln (DE); MILOS, Philippe, 49401 Damme (DE); KLEINER, Wolfgang, 49419 Wagenfeld (DE); BUHL, Reinhard, 49163 Bohmte (DE); SCHMITZ, Jürgen, 86668 Karlshuld (DE)
(86) Internationale Anmeldenummer: PCT/DE2009/050073
(87) Internationale Veröffentlichungsnummer: WO 2010/069304

(56) Entgegenhaltungen:
- DE-A1- 10 100 668
- DE-A1-102006 016 060
- JP-A- 58 112 626
- JP-A- 59 010 440
- US-A- 5 997 208

## Beschreibung

Die Erfindung betrifft ein Kugelgelenk sowie ein Verfahren zur Herstellung eines Gehäuses für ein Kugelgelenk und ein Verfahren zur Herstellung eines derartigen Kugelgelenkes.

Aus der gattungsbildenden DE 195 36 035 A1 ist ein Verfahren zur Herstellung eines Gehäuses für ein Kugelgelenk, insbesondere für Spurstangen von Kraftfahrzeugen, und ein mittels dieses Verfahrens hergestelltes Gehäuse für ein Kugelgelenk bekannt. Das Gehäuse verfügt über einen für die Lagerung der Gelenkkugel eines Kugelzapfens angepassten Innenraum. Das zunächst beidseitig offene Gehäuse wird später auf der einen Seite durch einen Deckel verschlossen, wobei zur Fixierung des Deckels ein Umformabschnitt am oberen Rand des Gehäuses vorhanden ist. Der Verschluss mittels eines Deckels erfolgt, nachdem der Kugelzapfen zusammen mit einer die Gelenkkugel lagernden Lagerschale in den Innenraum des Gehäuses eingesetzt wurde. Der Zapfenabschnitt des Kugelzapfens ragt auf der dem Deckel gegenüberliegenden Seite aus der Öffnung des Gehäuses heraus. Hier wird zur Abdichtung der inneren Gelenkbauteile ein Dichtungsbalg vorgesehen, wobei ein Randbereich dieses Dichtungsbalges dichtend an einem Anlagebereich der Außenmantelfläche des Gehäuses anliegt. Bei der aus der DE 195 36 035 A1 bekannten Lösung weist die Seite mit der Öffnung für den Durchtritt des Zapfenabschnittes des Kugelzapfens eine Anlageschulter auf, an der sich die in den Innenraum eingesetzte Lagerschale abstützt.

Aus der Druckschrift US 5,997,208 ist ein Kugelgelenk bekannt, bei dem eine Gelenkkugel mittels eines Sicherungsrings beweglich in einem Gehäuse fixiert ist. Der Sicherungsring stützt sich an einem nach innen gerichtente, als Flansch ausgeformten Bereich des Gehäuses ab.

Die DE 34 19 871 A1 betrifft darüber hinaus ein Gehäuse zur Aufnahme einer Gelenkkugel, das als Rohteil einen Innenraum zur Aufnahme der Gelenkkugel aufweist, der einseitig eine kugelige Kontur und auf der dieser Kontur gegenüberliegenden Seite einen innenraumseitig kreiszylindrischen Wulst aufweist. Nach dem Einsetzen der Gelenkkugel wird der Wulstrand des Gehäuses unter Anwendung eines Kaltumformverfahrens mittels eines Presswerkzeuges nach radial innen umgeformt, sodass die Gelenkkugel in dem Gehäuse fixiert ist. Anschließend wird bei dieser Lösung eine Wärmebehandlung erforderlich, um die Bewegbarkeit der Gelenkkugel wieder herzustellen. Der fertigungstechnische Aufwand zur Herstellung eines derartigen Kugelgelenkes ist erheblich.

Aus der DE 197 55 020 A1 geht ferner ein als Axialkugelgelenk ausgeführtes Kugelgelenk hervor, dessen Gehäuse einen für die Lagerung einer Gelenkkugel eines Kugelzapfens angepassten Innenraum sowie eine Öffnung zur Durchführung des sich an die Gelenkkugel anschließenden Zapfenabschnittes des Kugelzapfens aufweist. In den Innenraum des Gehäuses ist eine Lagerschale eingesetzt, die die Gelenkkugel aufnimmt. Die Lagerschale und das Gehäuse weisen dabei öffnungsseitig eine kreiszylindrische Geometrie mit konstanter Wandstärke auf. Nach dem Einsetzen der Lagerschale und der darin eingefügten Gelenkkugel des Kugelzapfens in das Gehäuse wird die vorhandene Öffnung des Gehäuses in einem begrenzten Umfang in Richtung auf das Gehäusezentrum hin verformt, so dass auf diese Weise ein selbsttätiges Lösen des Kugelzapfens aus dem Gehäuse verhindert wird und sich die Lagerschale an die Oberfläche der Gelenkkugel anlegt.

Als nachteilig bei dieser Lösung wurde jedoch erkannt, dass sich die Verformung des ursprünglich kreiszylindrischen Gehäuses bis in einen Bereich hinein ergibt, an dem nach Fertigstellung des Kugelgelenkes der Randabschnitt eines Dichtungsbalges anliegt. Dies kann zur Folge haben, dass der dauerhafte Festsitz des Dichtungsbalges gefährdet und damit ein Eindringen von Feuchtigkeit und Verunreinigungen in die inneren Gelenkbauteile zu befürchten ist.

Die Druckschrift DE 10 2006 016 060 A1 offenbart ein Radialgelenk mit einer drehbar in einem Gehäuse gelagerten Gelenkkugel. Ein öffnungsseitiger Randabschnitt des Gehäuses wird nach Einsetzen der Gelenkkugel durch ein Kaltumformverfahren verformt, bis zwischen der Gelenkkugel und dem Gehäuse eine metallische Überdeckung gegen ist, welche die Gelenkkugel formschlüssig und mit einer hinreichenden Auszugsfestigkeit fixiert.

Der Erfindung liegt die Aufgabe zugrunde, ein Kugelgelenk bereitzustellen, das mit geringem Aufwand zeit-, material- und energiesparend herzustellen ist.

Die Erfindung löst diese Aufgabenstellung mit den Merkmalen des unabhängigen Patentanspruches.
Weitere Ausgestaltungen der Erfindung sind Gegenstand der sich anschließenden Unteransprüche.

Ein Kugelgelenk mit einem insgesamt durch ein Kaltumformverfahren hergestellten Gehäuse bzw. Gelenkgehäuse, das einen für die Lagerung der Gelenkkugel eines Kugelzapfens angepassten Innenraum sowie einseitig eine Öffnung zur Durchführung des sich an die Gelenkkugel anschließenden Zapfenabschnittes des Kugelzapfens und einen an der Außenmantelfläche des Gehäuses vorhandenen Anlagebereich zur dichtenden Befestigung eines Dichtungsbalgrandes sowie einen Verschlussbereich des Gehäuses zur dreh- und schwenkbeweglichen Fixierung der Gelenkkugel des Kugelzapfens in dem Innenraum aufweist, wurde erfindungsgemäß dadurch weitergebildet, dass das durch die Kaltumformung bzw. während des Kaltumformprozesses verschobene Material nach der Fertigstellung des Gehäuses den Umformabschnitt des Gehäuses bildet.

Durch die Lösung nach der Erfindung ist es gelungen, ein Kugelgelenk im wesentlichen spanlos und somit nahezu abfallfrei und mit nur wenigen Arbeitsschritten herzustellen. Überschüssiger Werkstoff wird nicht entfernt, sondern zur Ausbildung eines speziellen und für die Erfindung bedeutungsvollen Umformabschnittes am hergestellten Gehäuse verwendet. Dieser Umformabschnitt bildet bei dem Gelenkgehäuse einen Verschlussbereich aus, der nach der Kaltumformung, z.B. Pressen oder Rollen, den Gelenkverschluss des fertig gestellten Kugelgelenkes ausbildet. Das bei anderen Ausführungen gemäß dem Stand der Technik erfolgende Lochen während der Herstellung des Gehäuses und der damit einhergehende Materialverlust kann vollständig entfallen. Damit können sowohl Bearbeitungszeit für die spanende Bearbeitung sowie Energie, als auch wertvolles Material eingespart werden. Es entfällt die ansonsten erforderliche Wiederaufbereitung bzw. Entsorgung des abfallenden Werkstoffes. Die Herstellungskosten für ein derartiges Kugelgelenk sind folglich gegenüber bekannten Lösungen erheblich reduziert. Erreichbar ist dies durch einen Ausgleich der Materialmassentoleranz über einen definierten Materialüberlauf während des Umformens des Gehäuserohlings durch Materialverschiebung.

Durch die einstückige Ausführung des Gehäuses als ein nur einseitig mit einer Öffnung versehenes Gehäuse können Bauteile wie ein Verschlussdeckel oder ein Verschlussring und zusätzliche Arbeitsschritte, wie das Festsetzen des Verschlussdeckels oder Verschlussringes zum Verschließen des Kugelgelenkes bei der erfindungsgemäßen Lösung entfallen.

Die Erfindung sieht weiterhin vor, dass der Umformabschnitt zum Verschluss des Gehäuses mittels eines Kaltumformverfahrens wie Pressen oder Rollen herstellbar bzw. umformbar ist. Diese an sich bekannten Fertigungsverfahren erweisen sich bei einer erfindungsgemäßen Lösung als besonders vorteilhaft, weil sie Energie- und damit Kosten sparend anwendbar sind und der Fertigungsaufwand gering ist. Die nahezu spanlose Herstellung erübrigt zudem Umrüstzeiten an Maschinen bzw. die spanende Bearbeitung wird nahezu vermieden. Zudem wird eine Vereinfachung der Montage eines mit dem erfindungsgemäßen Gehäuse ausgestatteten Kugelgelenkes erreicht.

Ferner kann es von Vorteil sein, wenn der Umformabschnitt vor seiner Umformung die Geometrie eines hohlen Kreiszylinders, Kegels oder Konus aufweist. Somit verfügt der Umformabschnitt über eine Form, die die Umformung des Umformabschnittes vereinfacht und zudem nach dem Einsetzen der Gelenkkugel des Kugelzapfens eine optimale Anlage des Umformabschnittes an der Gelenkkugel beziehungsweise am Lagerbereich der Gelenkkugel ermöglicht.

Der konische oder kegelförmige Verlauf des Umformabschnittes ist derart ausführbar, dass der Konus oder Kegel an der Gehäuseaußenkontur vorgesehen wird.

Mit dem gemäß einer Weiterbildung der Erfindung vorgesehenen Merkmal, dass der umgeformte Bereich des Umformabschnittes, d.h. der Verschlussbereich nach seiner Umformung eine im wesentlichen sphäroide Gestalt aufweist, kann ein maßgeblicher Vorteil erzielt werden. So wird die Lagerschale mit dem Verschlussbereich beim Verschließen des Kugelgelenkes derart umgeformt, dass sie sich optimal an die Gelenkkugel anlegt. Damit sind insgesamt höhere Traganteile in dem Kugelgelenk zu verzeichnen, was eine höhere Belastbarkeit bedeutet. Verstärkt werden kann dieser Effekt noch, wenn der Innenraum des Gehäuses und damit auch die Lagerschale insgesamt sphäroide Formen aufweisen.

Der Vorzug der Herstellung des Gehäuses durch ein Kaltumformverfahren ist auch darin zu sehen, dass bei der Umformung des Gehäuses auch vielfältige Konturen erzeugt werden können. Entsprechend einem weiteren Vorschlag der Erfindung ist daher vorgesehen, dass das Gehäuse an seiner der Öffnung gegenüberliegenden Unterseite eine Werkzeugauflagefläche aufweist.

Ebenso vorteilhaft kann bei der Umformung zum Beispiel an der der Öffnung des Gehäuses gegenüberliegenden Unterseite ein Justierflansch angeformt werden. Zur Ausbildung der Werkzeugauflagefläche und/oder des Justierflansches kann zudem ebenfalls überschüssiges Material verwendet werden, sodass hier keine Abfälle entstehen.

Werkzeugauflagefläche und/oder Justierflansch dienen bei der späteren Montage des Kugelgelenkes der Fixierung des Gehäuses in oder an einem das Gehäuse aufnehmenden Werkzeug. Damit wird eine Montagevereinfachung erreicht und so die Qualität der Montage verbessert.

Der Justierflansch kann als ringförmige, kreisförmige oder polygonale Erhebung ausgeführt sein. Maßgeblich ist nur, dass er eine Erhebung an der Unterseite des Gehäuses darstellt, die in eine korrespondierende Aufnahme des Werkzeuges eingesetzt werden kann, um somit das Gehäuse für den Zeitraum der Montage zu fixieren.

Wie bei zahlreichen Kugelgelenkausführungen bekannt, ist es auch bei einem Kugelgelenk nach der Erfindung möglich, in den Innenraum des Gehäuses eine Lagerschale einzusetzen, sodass damit die Lagerungseigenschaften des Kugelgelenkes gezielt beeinflusst werden können.

Zur Erleichterung der Montage des Kugelgelenkes ist es von Vorteil, wenn die Lagerschale im Wesentlichen eine konstante Wandstärke und bereits vor der Montage des Kugelgelenkes sphäroide, also kugelige Gestalt aufweist. Auf diese Weise kann die Lagerschale außerhalb des Gehäuses unmittelbar auf die Gelenkkugel des Kugelzapfens aufgesetzt und anschließend mit dem Kugelzapfen als vormontierte Baueinheit in das Gehäuse eingesetzt werden. Zudem ist durch die sphäroide Ausführung eine höhere Tragkraft erreichbar, wie dies zuvor bereits im Zusammenhang mit dem ebenfalls sphäroid gestalteten Umformabschnitt angedeutet wurde.

Eine Ausgestaltung der Erfindung sieht auch vor, dass die Lagerschale im Bereich ihres Öffnungsrandes einen stärkeren Materialquerschnitt aufweist, als in einem Abschnitt, durch den sich eine durch den Mittelpunkt der Gelenkkugel und orthogonal zur Längsachse des nicht ausgelenkten Kugelzapfens verlaufende Ebene erstreckt.

Durch diese Merkmale wird der Betrag der Umformung des Umformabschnittes erheblich reduziert. Dies führt dazu, dass an der äußeren Oberfläche des Gehäuses insgesamt eine geringere Verformung erfolgt, sodass auch und ganz besonders der Anlagebereich für den Dichtungsbalgrand nahezu unbeeinflusst von dem Umformvorgang zum Verschließen des Gehäuses bleibt. Damit lässt sich dieser Anlagebereich sehr exakt auslegen und es kann eine zuverlässige und sichere Abdichtung zwischen Dichtungsbalgrand und Gehäuse gewährleistet werden.

Ein weiterer Vorteil besteht darin, dass die Lagerschale zumindest zwei Bereiche mit unterschiedlichen Materialquerschnitten aufweist und zwar einen dünneren Abschnitt, etwa mittig der Gelenkkugel und einen verstärkten Teil im Bereich ihres Öffnungsrandes. Dadurch kann erreicht werden, dass die durch die mit der Umformung verbundenen Krafteinwirkungen auf die Lagerschale, innerhalb der Lagerschale optimale Spannungsverteilungen ergeben. Im Ergebnis passt sich die Lagerschale eines erfindungsgemäßen Kugelgelenkes derart an die Oberfläche der Gelenkkugel an, dass die Reibbeiwerte der Bauteilpaarung Gelenkkugel-Lagerschale sehr gering sind. Auf diese Weise lässt sich der Verschleiß des Kugelgelenkes in erheblichem Maße senken.

Der Öffnungsrand der Lagerschale kann zum Beispiel zumindest teilweise als verstärkter Randwulst ausgebildet sein.

Ein besonderes Problem bei den aus dem Stand der Technik bekannten Kugelgelenken besteht darin, sicherzustellen, dass sich die Lagerschale innerhalb des Innenraumes des Gehäuses über die gesamte Lebensdauer des Kugelgelenkes hinweg nicht lockert und beispielsweise Bewegungen innerhalb des Innenraumes vollzieht. Ein derartiges Kugelgelenk wäre schnell unbrauchbar. Auch hierfür bietet die Erfindung mit einem weiterführenden Vorschlag eine Lösung. Demnach wird in dem Innenraum des Gehäuses zumindest eine Erhebung als Verdrehsicherung für die Lagerschale vorgesehen. Diese Erhebung kann auf unterschiedliche Weise erzeugt werden. So genügt es, eine Materialverformung im Innenraum des Gehäuses zu erzeugen, deren Abmessung nur wenige Zehntel Millimeter beträgt, um zu erreichen, dass diese Erhebung beim Einsetzen der Lagerschale in den Innenraum des Gehäuses in das Lagerschalenmaterial eindringen und auf diese Weise die Lagerschale fixiert, was insbesondere als Verdrehsicherung optimal funktioniert. Von besonderem Vorteil ist es dabei, wenn die wenigstens eine Erhebung bereits bei der Herstellung des Gehäuses erzeugt wird.

Entsprechend einer vorteilhaften Weiterbildung der Erfindung weist das Gehäuse einen Absatz an seiner Gehäuseaußenkontur auf, der als Anlagebereich zur dichtenden Befestigung des Dichtungsbalgrandes dient und durch unterschiedliche Materialquerschnitte von Anlagebereich und Umformabschnitt gebildet wird. Der in seinem Querschnitt gegenüber dem Umformabschnitt verstärkte Anlagebereich bleibt bei der Umformung des Umformabschnittes unbeeinflusst, so dass die Auslegung des Anlagebereiches sehr genau auf die Abmessungen des Dichtungsbalgrandes abgestimmt werden kann. Durch die somit geschaffene Abstufung des Gehäuses in dem öffnungsseitigen Abschnitt werden zudem der Bereich der Anlage des Dichtungsbalgrandes und der Umformabschnitt umformtechnisch voneinander getrennt. Die Umformung derartiger Gehäuse ist damit während der Montage des Kugelgelenkes, verglichen mit den aus dem Stand der Technik bekannten Lösungen, wesentlich vereinfacht worden. Die Abdichtung wurde durch die erfindungsgemäße Maßnahme in ihrer Zuverlässigkeit und Dauerhaftigkeit entscheidend verbessert.

Von Bedeutung für die Ausführung des Anlagebereiches und des Umformabschnittes ist ferner, dass der Außendurchmesser des Umformabschnittes kleiner ist als der Außendurchmesser des Anlagebereiches für den Dichtungsbalgrand, so dass damit der Umformabschnitt einen im Vergleich zum Anlagebereich geringeren Materialquerschnitt aufweist und die Geometrie des Innenraumes des Gehäuses ohne Übergänge gestaltet werden kann.

Der aus dem Umformabschnitt durch ein Kaltumformverfahren hergestellte Verschlussbereich weist vorteilhafter Weise nach seiner Umformung, also in der endgültigen Form als Verschluss des Kugelgelenkes, eine den Rand der Öffnung bildende Schrägfläche auf, die mit der Geometrie des Zapfenabschnittes des Kugelzapfens in diesem Bereich korrespondiert. Durch diese vorteilhafte Ausgestaltung kann erreicht werden, dass bei maximalem Ausschlag des Kugelzapfens zu einer Seite eine Linienberührung am Gehäuse gegeben ist. Diese Linienberührung weist gegenüber einer Punktberührung den Vorteil einer sehr geringen Kerbwirkung auf, sodass die Oberfläche des Kugelzapfens auch bei mehrfachem Berührungskontakt nicht beschädigt wird. Von besonderer Bedeutung ist dies insbesondere, wenn der Kugelzapfen einen Oberflächenschutz aufweist.

Eine weitere Ausgestaltung der Erfindung besteht darin, dass zwischen dem Umformabschnitt und dem Anlagebereich ein Übergangsbereich vorhanden ist. Mit dieser Maßnahme wird erreicht, dass zwischen dem Anlagebereich zur Festlegung des Dichtungsbalgrandes und dem Umformabschnitt ein möglichst harmonischer Übergang geschaffen werden kann. Nach der Fertigstellung des mit einem erfindungsgemäßen Gehäuse ausgestatteten Kugelgelenkes ist der Übergangsbereich nicht mehr oder nur noch geringfügig zu erkennen. Er passt sich vorzugsweise während der Umformung des Umformabschnittes exakt dessen Verlauf an.

Es ist nach einem weiterführenden Vorschlag der Erfindung vorgesehen, dass der Übergangsbereich durch wenigstens einen Radius gebildet ist. Bevorzugt sollten jedoch im Übergangsbereich mehrere, fließend ineinander übergehende Radien vorgesehen werden. Mit diesem, durch Radien geschaffenen, fließenden Übergang zwischen dem Anlagebereich zur Befestigung des Dichtungsbalgrandes und dem Umformabschnitt kann ferner erreicht werden, dass keine scharfkantigen Übergänge an dem Gehäuse vorhanden sind. Derartige scharfkantige Übergänge könnten zu einer Beschädigung des für die Abdichtung des Kugelgelenkes wesentlichen Bereiches der Anlage des Dichtungsbalgrandes führen.

Eine spezielle Variante des erfindungsgemäßen Gehäuses besteht ferner darin, dass der Anlagebereich für den Dichtungsbalgrand eine kreiszylindrische, kegelige oder konische Form aufweist. Mit der bevorzugten, kreiszylindrischen Form des Anlagebereiches wird eine Oberfläche bereitgestellt, die eine optimale Dichtwirkung zwischen dem Anlagebereich und dem an diesem anliegenden Dichtungsbalgrand ermöglicht.
Die Gestaltung des Anlagebereiches als Konus oder Kegel kann darüber hinaus die dichtende Anlage des Dichtungsbalgrandes weiter verbessern beziehungsweise unterstützend dazu dienen, dass sich der Dichtungsbalgrand nicht von dem Anlagebereich löst.

Darüber hinaus sind Dichtkonturen, wie verzahnungsartige Strukturen denkbar, so dass ein Ineinandergreifen des Anlagebereiches und des Dichtungsbalgrandes erfolgen kann.

Eine besonders vorteilhafte Weiterbildung der Erfindung besteht darin, dass der Anlagebereich für den Dichtungsbalgrand in einem Abschnitt des Gehäuses, durch den sich eine durch den Mittelpunkt der Gelenkkugel und orthogonal zur Längsachse des nicht ausgelenkten Kugelzapfens verlaufende Ebene erstreckt, angeordnet ist.
Durch diese demnach etwa mittig des Gehäuses vorhandene Anlage für den Dichtungsbalgrand kann eine optimale Abdichtung geschaffen werden. Die durch Verschwenken des Kugelzapfens auf den Dichtungsbalg einwirkende Zugbelastung beziehungsweise die den Dichtungsbalg beanspruchende Torsion kann größtenteils durch diese Maßnahme kompensiert werden. Der Dichtungsbalg weist hierbei eine Länge auf, die es gestattet, ihn wendelförmig, mit mehreren Falten auszustatten, so dass er die genannten Bewegungen aufgrund der ihm inhärenten Eigenelastizität kompensieren kann und sich nicht von seinem Anlagebereich ablöst.

Wird der Anlagebereich für den Dichtungsbalgrand etwa in Höhe des Mittelpunktes der Gelenkkugel vorgesehen, ist dies insbesondere für Radialgelenke von Vorteil. Derartige Radialgelenke weisen zumeist einen seitlich von dem Gehäuse abragenden Schaft auf, der dazu dient, das Gehäuse später mit korrespondierenden Bauteilen zu verbinden. Dieser in Bezug auf die Längsachse des nicht ausgelenkten Kugelzapfens radial verlaufende Schaft schließt sich unmittelbar an den Anlagebereich für den Dichtungsbalgrand an. Es konnte festgestellt werden, dass durch die erfindungsgemäße Ausführung des Gehäuses die Anbindung des Schaftes bei Radialgelenken mit geringeren Biegespannungen unter Belastung einhergeht. Dies stellt einen weiteren sehr wesentlichen Vorteil der hier beschriebenen Ausgestaltung dar.

Im Besonderen kann der Anlagebereich für den Dichtungsbalgrand nahezu parallel zur Längsachse des nicht ausgelenkten Kugelzapfens verlaufen. Mit anderen Worten bildet der Anlagebereich eine Kontur, an die sich der Dichtungsbalgrand optimal anlegen kann. Die Neigung des Dichtungsbalgrandes kann hierbei im Bereich von 0°-5° variieren, wobei die Neigung zum Zapfeninneren bzw. zur Längsachse des nicht ausgelenkten Kugelzapfens hin verläuft. Auch hierbei erweist sich die Herstellung des Gehäuses durch ein Kaltumformverfahren als vorteilhaft, da der Anlagebereich insgesamt bei der Erzeugung des Gehäuses mit ausgeformt werden kann, ohne, dass es einer spanenden Bearbeitung bedarf.

Zur Verbindung des Gehäuses mit einem Schaft, wie er bei Radialgelenken vorgesehen werden kann, ist es neben einer einteiligen oder einstückigen Ausbildung von Gehäuse und Schaft erfindungsgemäß auch möglich, dass an dem Gehäuse ein durch Materialverformung oder durch Schweißen nachträglich befestigter Schaft vorhanden ist.

Erfindungsgemäß weist das Gehäuse nach dessen Verschluss in der Draufsicht ein Langloch auf. Um das Langloch mit der Kaltumformung des Verschlussbereiches aus dem Umformabschnitt in einem Arbeitsgang ausbilden zu können, weist der Umformabschnitt des Gehäuses zwei einander diametral gegenüberliegende, vertiefte Randabschnitte und zwei zwischen diesen jeweils erhöhte Randabschnitte auf.

Das Verfahren zur Herstellung des Gehäuses für ein Kugelgelenk weist die folgenden Verfahrensschritte auf:
- Herstellung eines metallischen Gehäuserohlings 25 mit einer durch Kaltumformung angeformten Verdickung 26,
- Ausbildung der Gehäuseaußenkontur 27 durch Kaltumformung,
- Formung der Gehäuseinnenkontur 28 durch Kaltumformung, wobei das durch das jeweilige Kaltumformverfahren verschobene Material einen Dichtungsbalgrand 8 und den Umformabschnitt 9 bildet, derart, dass durch den Umformabschnitt 9 ein umlaufender umformbarer Verschlussbereich 9 gebildet wird.

Das erfindungsgemäße Verfahren zur Herstellung eines Kugelgelenkes ist durch folgende Verfahrensschritte gekennzeichnet:
- Herstellung des einstückigen kaltumgeformten Gelenkgehäuses 1,
- Formung der Gehäuseinnenkontur 28 durch Kaltumformung, wobei das durch das Kaltumformverfahren verschobene Material einen Dichtungsbalgrand 8 und einen Umformabschnitt 9 bildet, derart, dass nach Einsetzen der Gelenkkugel 2 des Kugelzapfens in den Innenraum 4 ein umlaufender Verschlussbereich 9 durch Kaltumformung gebildet wird.

Dabei kann entsprechend einer Weiterführung dieser grundlegenden Verfahrensschritte während des Napfens gleichfalls die Ausprägung einer Werkzeugauflagefläche und/oder eines Justierflansches an der Unterseite des Gehäuses erfolgen.

Ohne erheblichen Mehraufwand lässt sich durch Materialverschiebung mittels eines Werkzeuges in der Gehäuseinnenkontur zumindest eine Erhebung als Verdrehsicherung für die Lagerschale ausbilden.

Bei dem erfindungsgemäß zur Herstellung des Gehäuses zum Einsatz kommenden Kaltumformverfahren handelt es sich bevorzugt um ein Kaltfließpressverfahren, weil hiermit ein nahezu spanlos erzeugtes Gehäuse erreichbar ist.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung des Prinzips der Erfindung. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile oder Elemente verzichtet wurde. Dies bedeutet jedoch nicht, dass derartige Bauteile oder Elemente bei einer erfindungsgemäßen Lösung nicht vorhanden sind.
Es zeigen:
- Figur 1:: ausschnittsweise den Kopfbereich einer ersten Ausführung eines fertig montierten Kugelgelenkes im Schnitt,
- Figur 2:: ausschnittsweise den Kopfbereich einer zweiten Ausführung eines fertig montierten Kugelgelenkes im Schnitt,
- Figur 3:: den vergrößerten Ausschnitt III aus Figur 1 beziehungsweise aus Figur 2,
- Figur 4:: eine erste Variante eines Gehäuses als Einzelteil und im Teilschnitt,
- Figur 5:: eine zweite Variante eines Gehäuses als Einzelteil und im Teilschnitt,
- Figur 6:: den Blick in Richtung des Pfeils VI in Figur 5 in das Gehäuse,
- Figur 7:: einen Teilzusammenbau eines erfindungsgemäßen Kugelgelenkes im Schnitt,
- Figur 8:: vereinfacht die Umformung des Umformabschnittes zum Verschluss des Gehäuses,
- Figur 9:: ein Gehäuse als Einzelteil für eine spezielle Ausführung eines Kugelgelenkes
und
- Figur 10:: einen vereinfachten Stadienplan zur Darstellung der Herstellung des Gehäuses durch Kaltumformung.

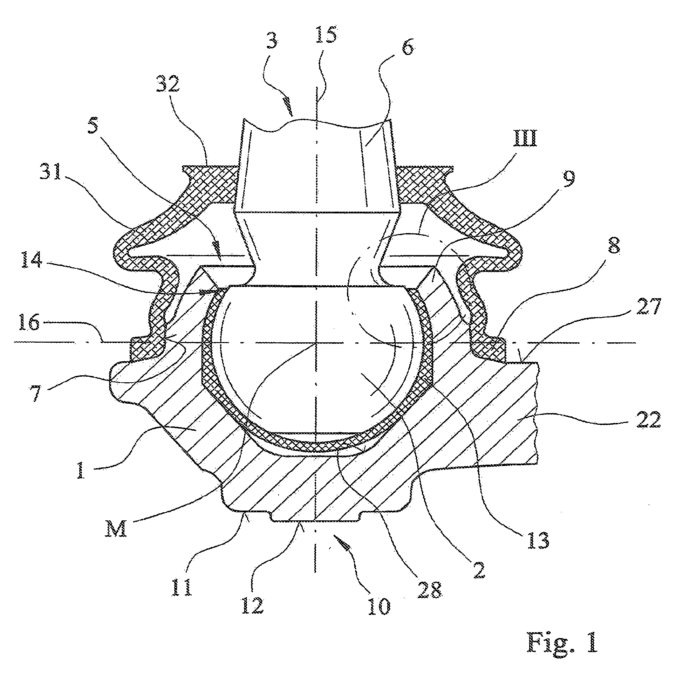

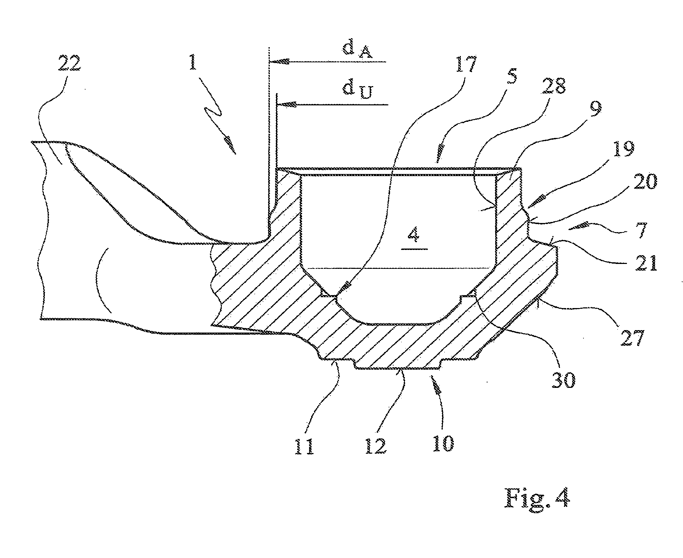

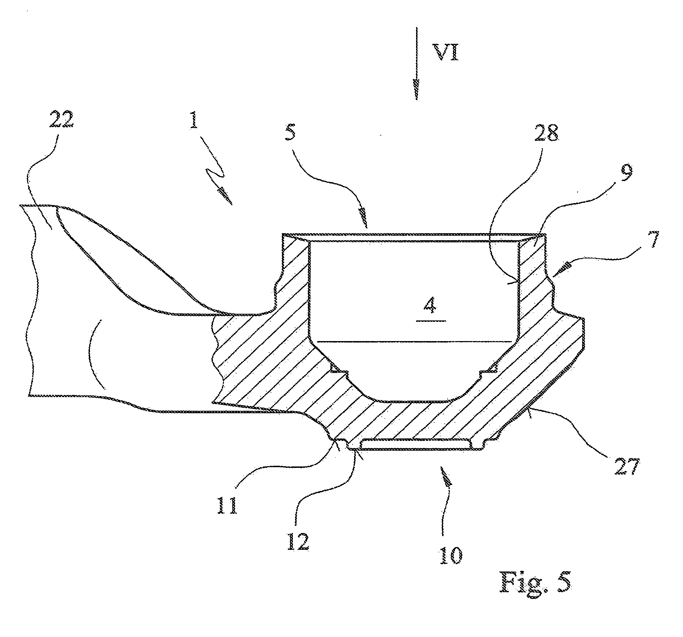

In der Figur 1 ist ein fertig montiertes Kugelgelenk im Schnitt dargestellt. Das Gehäuse 1 verfügt über einen radial abragenden Schaft 22, mittels dessen das Gehäuse 1 an einem korrespondierenden Bauteil eines Kraftfahrzeuges befestigt werden kann. In einen in dem Gehäuse 1 vorhandenen Innenraum 4, der deutlicher in der Figur 4 oder der Figur 5 zu sehen ist, ist eine Lagerschale 13 eingefügt, die mit ihrer Außenmantelfläche in weiten Bereichen unmittelbar an der Gehäuseinnenkontur 28 des Innenraumes 4 anliegt. Die Gehäuseinnenkontur 28 weist bei dieser Kugelgelenkausführung Schrägflächen auf, an denen sich die Lagerschale 13 mit korrespondierenden Schrägen abstützt. Die aus Kunststoff bestehende und begrenzt elastische Eigenschaften aufweisende Lagerschale 13 nimmt ihrerseits mit ihrer Innenmantelfläche, die im vorliegenden Fall kugelförmig ausgebildet ist, eine Gelenkkugel 2 eines Kugelzapfens 3 auf. In der Darstellung der Figur 1 ist der Kugelzapfen 3 in einer nicht ausgelenkten Position gezeigt. Ausgehend von der Gelenkkugel 2 geht der Kugelzapfen 3 in einen Zapfenabschnitt 6 über, der aus einer Öffnung 5 des Gehäuses 1 herausragt. Zur Abdichtung der inneren Gelenkbauteile gegenüber der Umgebung dient ein Dichtungsbalg 31. Dieser verfügt über einen ersten Dichtungsbalgrand 8 sowie einen diesem gegenüberliegend vorhandenen, zweiten Dichtungsbalgrand 32, der unmittelbar am Zapfenabschnitt 6 des Kugelzapfens 3 zur Anlage kommt. Der Dichtungsbalgrand 8 liegt dichtend an einem Anlagebereich 7 an der Gehäuseaußenkontur 27 des Gehäuses 1 an. Dieser Anlagebereich 7 des Gehäuses 1 verfügt über einen größeren Durchmesser als der sich in Richtung Öffnung 5 des Gehäuses 1 anschließende Gelenkverschluss 9.

Der Gelenkverschluss 9 ist bei dem gezeigten Beispiel zur Fixierung der Gelenkkugel 2 und der Lagerschale 13 in dem Gehäuse 1 des Kugelgelenkes in Richtung auf die Gelenkmitte, also auf den Mittelpunkt M hin verformt.

Von Bedeutung ist bei der Darstellung in Figur 1 ferner, dass der Dichtungsbalgrand 8 sich in einer Ebene 16 befindet, die orthogonal zu der Längsachse 15 des nicht ausgelenkten Kugelzapfens 3 und ferner durch den Mittelpunkt M der Gelenkkugel 2 verläuft. Somit ist der Dichtungsbalgrand 8 etwa gelenkmittig angeordnet, was den wesentlichen Vorteil mit sich bringt, dass er durch die Bewegung des Kugelzapfens 3 innerhalb des Gehäuses 1 erzeugte Belastungen optimal kompensieren kann. In diesem Bereich weist zudem die Lagerschale 13 einen geringeren Material-querschnitt auf, als an ihrem Öffnungsrand 14. An der Unterseite 10 des Gehäuses 1 sind ferner eine Werkzeugauflagefläche 11 sowie ein Justierflansch 12 angeformt, die mit der Herstellung des Gehäuses erzeugt werden.

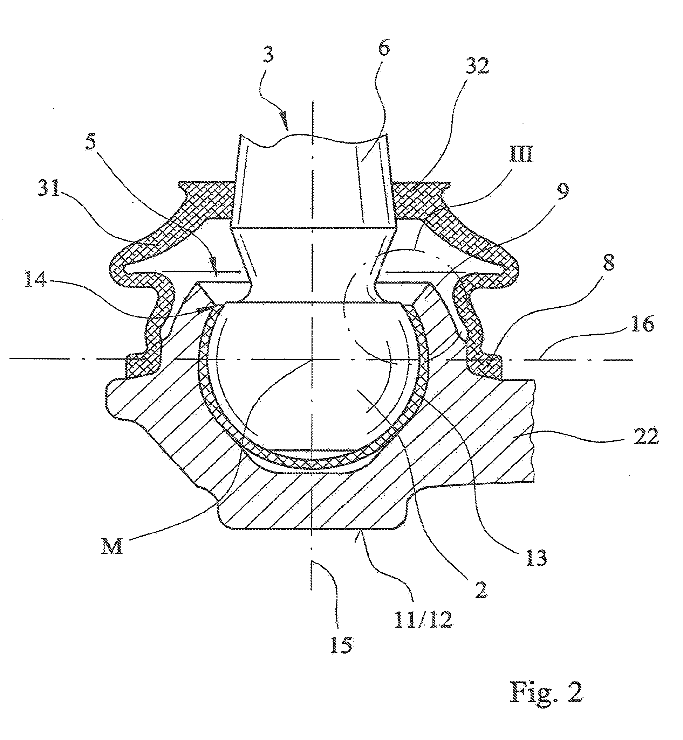

Im Unterschied zur Figur 1 weist die Ausführung eines Kugelgelenkes in der Figur 2 eine Lagerschale 13 auf, die einen annähernd konstanten Materialquerschnitt über ihren gesamten Umfang aufweist. Lediglich der Öffnungsrand 14 ist wie bei dem Kugelgelenk in Figur 1 verstärkt ausgeführt. Dieser sphäroiden Kontur ist auch der Innenraum 4 des Gehäuses 1 angepasst, der ebenfalls kugelförmig gestaltet ist. Durch diese Maßnahmen kann ein wesentlich höherer Traganteil erreicht werden, was bedeutet, dass diese Kugelgelenke höher belastbar sind, als bekannte Ausführungen. Die Unterseite 10 des Gehäuses 1 ist zudem bei der Variante in Figur 2 als Werkzeugauflagefläche 11 mit der Funktion als Justierflansch 12 ausgeführt.

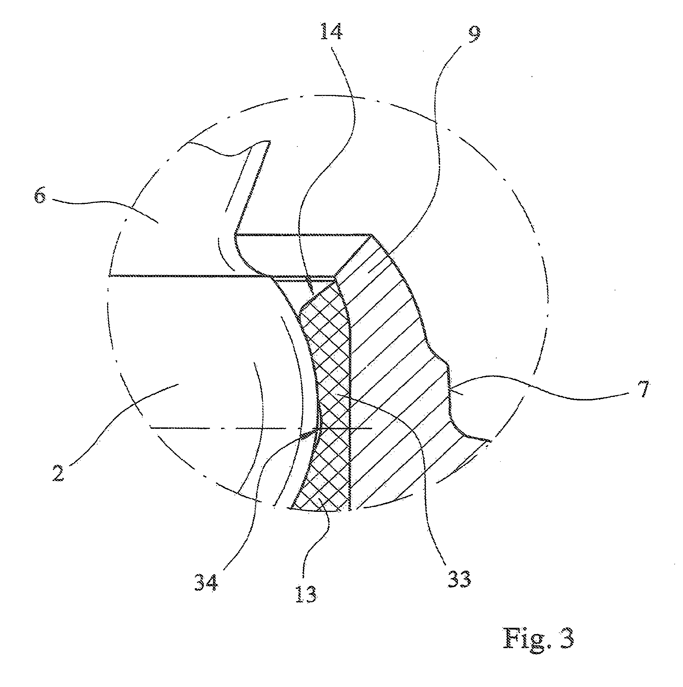

Der vergrößerte Ausschnitt III aus den Figuren 1 und 2 ist in der Figur 3 gezeigt. Hieraus wird ersichtlich, dass die Lagerschale 13 an ihrem Öffnungsrand 14 eine Verdickung und in dem äquatornahen Lagerschalenabschnitt 33 eine sehr schmale Kontur aufweist. Durch die verdickte Gestaltung des Öffnungsrandes 14 der Lagerschale 13 muss der Umformabschnitt 9 des Gehäuses 1 nur in einem geringen Maße umgeformt werden, sodass bei der Umformung kein Einfluss auf den angrenzenden Anlagebereich 7 des Gehäuses 1 ausgeübt wird. Der Anlagebereich 7 kann daher sehr genau für die Anlage des Dichtungsbalgrandes angepasst werden.

Deutlich erkennbar sind in der Figur 3 auch die Taschen 34 auf der Innenseite der Lagerschale 13, im Kontaktbereich zur Gelenkkugel 2.

In der in Figur 4 als Einzelteil gezeigten ersten Ausführung eines Gehäuses 1 ist ein Innenraum 4 vorhanden, dessen Gestaltung die Aufnahme der Gelenkkugel 2 des Kugelzapfens 3, wie auch der diese Gelenkkugel 2 lagernden Lagerschale 13 gestattet. Das Gehäuse 1 verfügt als einseitig offenes Gehäuse 1 über eine Öffnung 5. Durch diese Öffnung 5 kann bei der Montage des Kugelgelenkes eine Baugruppe, bestehend aus dem Kugelzapfen 3 und der auf der Gelenkkugel 2 des Kugelzapfens 3 aufgesetzten Lagerschale 13, in das Gehäuse 1 eingeführt werden. Im öffnungsseitigen Bereich weist das Gehäuse 1 an seiner Gehäuseaußenkontur 27 den Anlagebereich 7 zur dichtenden Anlage eines hier nicht gezeigten Dichtungsbalgrandes 8 auf. Dieser Anlagebereich 7 setzt sich vorliegend aus zwei Abschnitten zusammen, nämlich einem Axialabschnitt 20, der in einen Neigungsabschnitt 21 übergeht. Axialabschnitt 20 und Neigungsabschnitt 21 bilden einen V-förmigen Anlagebereich 7, der über einen stumpfen Winkel als Öffnungswinkel verfügt. Der Axialabschnitt 20 ist eine kreiszylindrische Anlagefläche und verfügt folglich über einen Durchmesser d_{A}.

In Richtung der Öffnung 5 betrachtet, schließt sich an den Anlagebereich 7 der Umformabschnitt 9 an, der nach dem Einsetzen der Gelenkkugel 2 des Kugelzapfens 3 in den Innenraum 4 des Gehäuses 1 durch eine zur Gelenkmitte hin erfolgende Umformung für die Fixierung der Gelenkkugel 2 in dem Innenraum 4 sorgt. Die Umformung des Umformabschnittes 9 erfolgt dabei derart, dass die Gelenkkugel innerhalb des Innenraumes 4 dreh- und schwenkbar bleibt. Von besonderem Vorteil ist es dabei, wenn die Umformung unter gleichzeitiger Messung des Widerstandsmomentes erfolgt, so dass die sich zwischen der Gelenkkugel und den diese aufnehmenden Lagerbauteilen einstellenden Reibwerte festgelegt werden können und das somit erzeugte Kugelgelenk exakt definierbare Reibungswerte aufweist.

Der Außendurchmesser d_{U} des Umformabschnittes 9 ist, wie dies deutlich aus der Darstellung in Figur 4 hervorgeht, kleiner als der Außendurchmesser d_{A} des Anlagebereiches 7, so dass bei der Umformung des Umformabschnittes 9 kein Einfluss auf den Anlagebereich 7 ausgeübt wird. Zwischen dem Anlagebereich 7 und dem Umformabschnitt 9 ist ein Übergangsbereich 19 vorhanden, der aus mehreren, fließend ineinander übergehenden Radien besteht. Zur Vermeidung scharfkantiger Übergänge werden in diesem Abschnitt des Gehäuses 1 vorzugsweise Radien verwendet, so dass hier ein harmonischer und fließender Übergang zwischen den einzelnen Gehäuseabschnitten geschaffen wird. In der Gehäuseinnenkontur 28 des Innenraumes 4 des Gehäuses 1 sind zudem mehrere Erhebungen 17 ausgebildet, die durch eine Materialverschiebung gebildet werden, sodass unmittelbar angrenzend zu diesen Erhebungen 17 Ausnehmungen 30 vorhanden sind. Die Erhebungen dienen bei montiertem Kugelgelenk später als Verdrehsicherung der Lagerschale.

Eine weitere Besonderheit dieses Gehäuses 1 besteht darin, dass an der Unterseite 10 eine Werkzeugauflagefläche 11 und als zentrale Erhebung ein Justierflansch 12 angeformt sind, die zur Optimierung der Montage des Kugelgelenkes hilfreich sind.

Im Unterschied zu dem im Grunde baugleich zur Figur 4 ausgeführten Gehäuse 1 ist das in Figur 5 dargestellte Gehäuse 1 an seiner Unterseite 10 mit einer Werkzeugauflagefläche 11 und einem ringförmigen Justierflansch 12 ausgestattet.

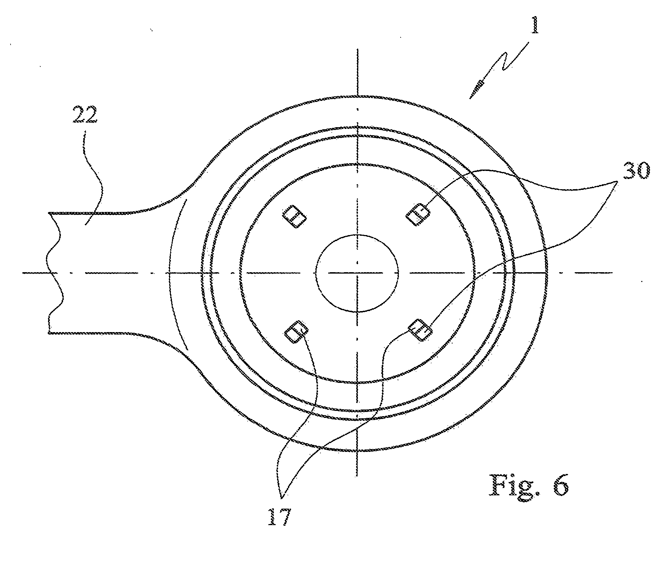

Die Figur 6 stellt einen Blick in den Innenraum 4 des Gehäuses 1 als Einzelteil, entsprechend der Richtung des Pfeils VI in Figur 5 dar. Erkennbar werden darin die Ausnehmungen 30, aus denen bei der Gehäuseherstellung Werkstoff zur Bildung der Erhebungen 17 herausgearbeitet wurde. Seitlich ist an dem Gehäuse 1 der Schaft 22 einstückig angeformt.

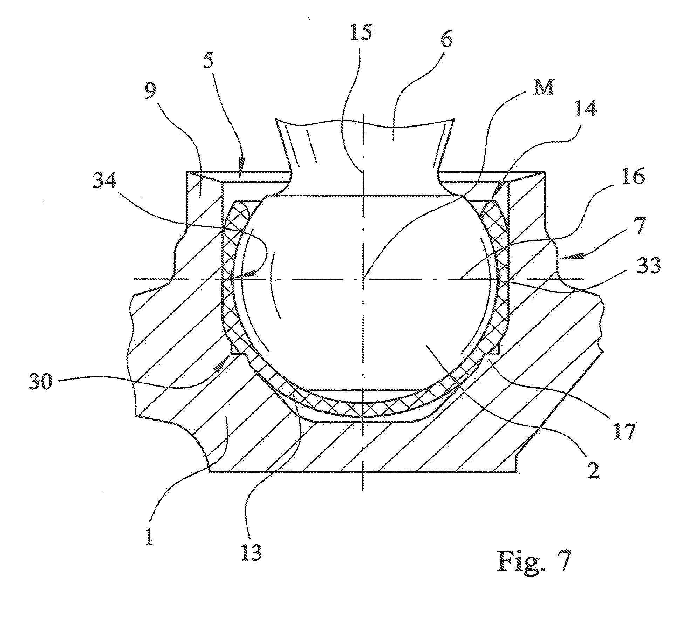

Einen Teilzusammenbau eines erfindungsgemäßen Kugelgelenkes im Schnitt veranschaulicht Figur 7 für eine Ausführungsvariante eines erfindungsgemäßen Kugelgelenkes. In das in Figur 7 noch offene, also unverformte Gehäuse 1 sind die Lagerschale 13 und der Kugelzapfen 3 eingesetzt, wobei der Umformabschnitt 9 des Gehäuses 1 eine kreiszylindrische Kontur aufweist. Die Lagerschale 13 nimmt die Gelenkkugel 2 des Kugelzapfens 3 mit ihrer sphäroiden Lagerfläche dreh- und schwenkbar auf und weist im Bereich ihres Öffnungsrandes 14 einen stärkeren Materialquerschnitt auf, als in einem Abschnitt, durch den sich eine durch den Mittelpunkt M der Gelenkkugel 2 und orthogonal zur Längsachse 15 des nicht ausgelenkten Kugelzapfens 3 verlaufende, gedachte Ebene 16 erstreckt. Mit anderen Worten weist die Lagerschale 13 im Bereich des Äquators der Gelenkkugel 2 einen Lagerschalenabschnitt 33 auf, der dünner ist, als der Öffnungsrand 14, wo die Lagerschale 13 über eine wulstartige Verdickung verfügt. Taschen 34 der Lagerschale 13 können zur Befüllung mit Schmiermittel genutzt werden und haben zudem den Vorteil, dass sie eine Reibungsminderung zwischen Gelenkkugel 2 und Lagerschale 13 bewirken.

In dem Innenraum 4 des Gehäuses 1 sind ferner Erhebungen 17 in die Oberfläche des Innenraumes 4 eingeformt, die durch eine Materialverformung bei der Herstellung des Gehäuses 1 erzeugt werden. Dabei erfolgt eine Materialverschiebung, sodass Gehäusewerkstoff, der in der Darstellung der Figur 7 aus den Ausnehmungen 30 stammt, die Erhebungen 17 bildet.

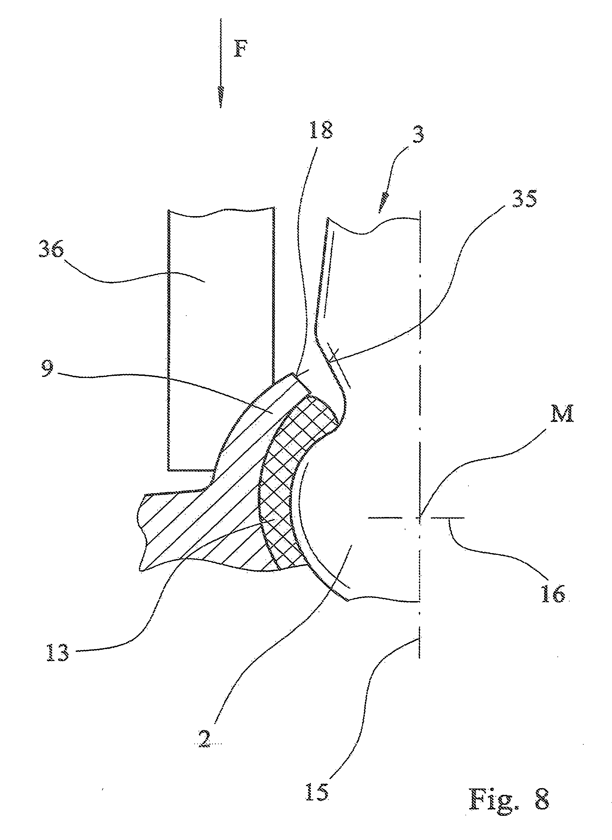

Der Figur 8 ist eine stark vereinfachte Darstellung der Umformung des Umformabschnittes bzw. Gelenkverschlusses 9 des Gehäuses 1 zu entnehmen. Zur Kaltumformung des ursprünglich eine kreiszylindrische Form aufweisenden Umformabschnittes dient dabei ein Presswerkzeug 36, das mit einer durch einen Pfeil symbolisierten Kraft "F" auf den Umformabschnitt 9 einwirkt. Ein Teil des Presswerkzeuges 36 weist dabei die spätere Kontur der Gehäuseaußenkontur 27 des Gehäuses 1 auf. Im vorliegenden Beispiel wird der Gelenkverschluss 9 innen und außen mit einer sphäroiden Kontur ausgestattet. Dies hat den Vorteil, dass die Lagerschale 13 sich optimal an die Gelenkkugel 2 anlegt und keine scharfkantigen Übergänge entstehen. Zudem besteht eine weitere Besonderheit darin, dass der Gelenkverschluss 9 des Gehäuses 1 öffnungsseitig eine Schrägfläche 18 aufweist. Diese Schrägfläche 18, die mit einer Anlageschulter 35 des Zapfenabschnittes 6 des Kugelzapfens 3 korrespondiert, führt dazu, dass bei maximalem Ausschlag des Kugelzapfens 3 zu einer Seite eine Linienberührung am Gehäuse 1 gegeben ist. Diese Linienberührung weist gegenüber einer Punktberührung den Vorteil einer sehr geringen Kerbwirkung auf, sodass die Oberfläche des Kugelzapfens 3 auch bei mehrfachem Berührungskontakt nicht beschädigt wird. Aus der sphäroiden Gestalt des Gelenkverschlusses 9 ergibt sich jedoch noch ein weiterer Vorteil. So ist es bei dem Verschluss des Kugelgelenkes möglich, den Verschlussbereich des Gelenkverschlusses 9 bis in den Übergangsbereich zwischen Gelenkkugel 2 und Zapfenabschnitt 6, also bis in den so genannten Zapfenhals hinein zu verformen, sodass dadurch eine sehr hohe Auszugsfestigkeit erreicht werden kann. Mit anderen Worten kann der Durchmesser des Zapfenabschnittes 6 des Kugelzapfens 3 sogar größer sein, als der endgültige Öffnungsquerschnitt der Öffnung 5 des Gehäuses 1. Bei Kugelgelenken mit einem beidseitig offenen und durch einen Deckel zu verschließenden Gehäuse wäre diese Möglichkeit nicht umsetzbar, da der Kugelzapfen hier von der Deckelseite in das Gehäuse eingeführt und daher durch die der Deckelseite gegenüberliegende Öffnung des Gehäuses hindurchgeführt werden muss. Bei beidseitig offenen Kugelgelenken ist daher stets der Durchmesser des Zapfenabschnittes des Kugelzapfens kleiner, als der endgültige Öffnungsquerschnitt der Öffnung des Gehäuses.

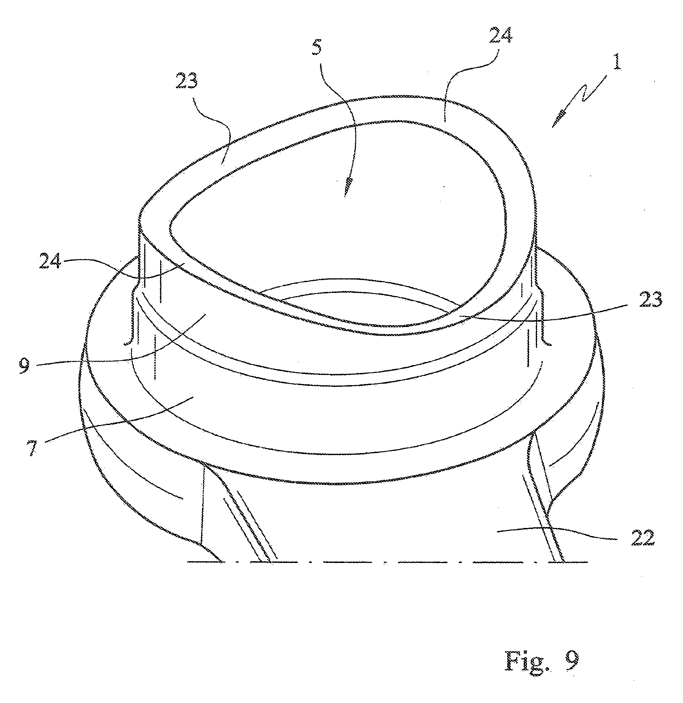

Eine spezielle Ausführung eines Gehäuses 1 zeigt die Darstellung in Figur 9. Diese Bauart eines Gehäuses 1 ermöglicht nach seiner Fertigstellung in der Draufsicht ein Langloch als Öffnung 5, durch die der Zapfenabschnitt 6 des Kugelzapfens 3 hindurchragt. Um das Langloch mit der Umformung des Umformabschnittes 9 in einem Arbeitsgang ausbilden zu können, weist das Gehäuse in Figur 9 zwei einander diametral gegenüberliegende, vertiefte Randabschnitte 23 und zwischen diesen jeweils einen erhöhten Randabschnitt 24 des Umformabschnittes 9 auf. Unterhalb des Umformabschnittes 9 verfügt auch dieses Gehäuse 1 über den Anlagebereich 7 für den Dichtungsbalgrand 8.

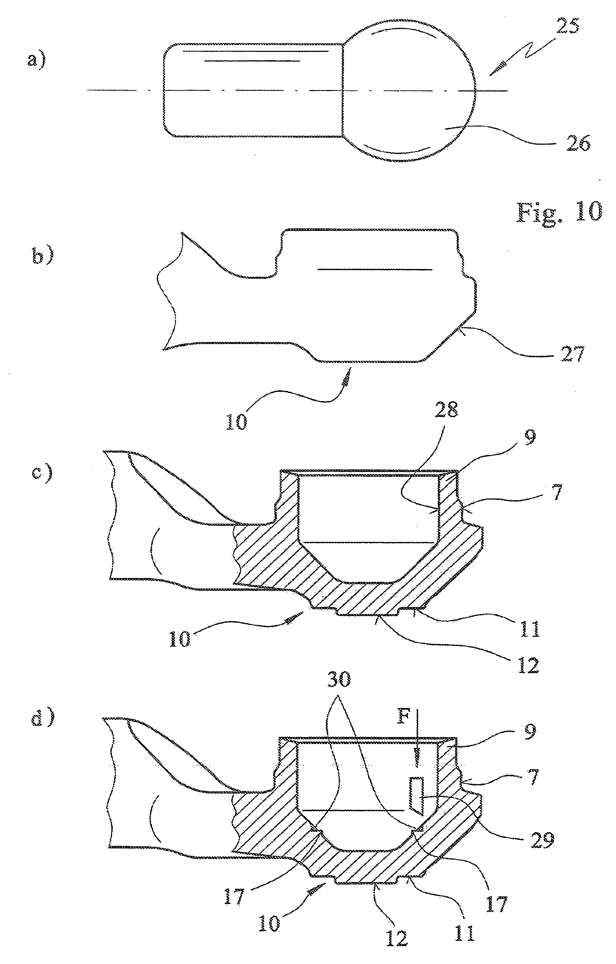

Mit Hilfe des stark vereinfachten Stadienplanes in der Figur 10 soll nachfolgend das erfindungsgemäße Verfahren erläutert werden. Zunächst erfolgt die Herstellung eines metallischen Gehäuserohlings 25 mit einer durch Stauchen angeformten Verdickung 26, wie er im Bildteil a) der Figur 10 gezeigt ist.

Im Anschluss daran wird entsprechend der Darstellung im Bildteil b) der Figur 10 der Gehäuserohling 25 durch Stauchen mit einer Gehäuseaußenkontur 27 versehen, die bis auf ein unter Umständen noch zu vollziehendes Kalibrieren weitgehend der endgültigen Gehäuseaußenkontur 27 entspricht.

Zur Formung der Gehäuseinnenkontur 28 wird bevorzugt Napfen eingesetzt, wobei das verschobene Material insbesondere zur Ausbildung des Umformabschnittes 9 genutzt wird. Wie aus dem Bildteil c) der Figur 10 ersichtlich ist, erfolgt bei diesem Arbeitsgang auch die Ausprägung einer Werkzeugauflagefläche 11 und eines Justierflansches 12 an der Unterseite 10 des Gehäuses 1.

Die Fertigstellung des Gehäuses 1 ist vollzogen, wenn mittels eines Werkzeuges 29 in dem Innenraum 4 Erhebungen 17 herausgearbeitet wurden, die im fertig montierten Kugelgelenk als Verdrehsicherung für die Lagerschale dienen. Die Herstellung der Erhebungen 17 erfolgt dabei durch einen einfachen Materialaustrieb.

Die Herstellung des Kugelgelenkes mit dem zuvor hergestellten Gehäuse kann in weiteren separaten Schritten erfolgen:
- Formung der Gehäuseinnenkontur 28 durch Kaltumformung, wobei das durch das Kaltumformverfahren verschobene Material einen Dichtungsbalgrand 8 und einen Umformabschnitt 9 bildet, derart, dass ein umlaufender Verschlussbereich 9 gebildet wird,
- Aufsetzten einer Lagerschale 13 auf die Gelenkkugel 2,
- Einsetzen der Gelenkkugel des Kugelzapfens in den Innenraum 4,
- Verschließen des Gelenkes durch Kaltumformen des Verschlussbereiches 9, derart, dass ein Gelenkverschluss 9 entsteht.

### Bezugszeichenliste

1. Gehäuse, Gehäusekopf
2. Gelenkkugel
3. Kugelzapfen
4. Innenraum
5. Winkelausschlagöffnung
6. Zapfenabschnitt
7. Anlagebereich
8. Dichtungsbalgrand
9. Umformabschnitt, Verschlussbereich, Gelenkverschluss
10. Unterseite
11. Werkzeugauflagefläche
12. Justierflansch
13. Lagerschale
14. Öffnungsrand (der Lagerschale)
15.Längsachse
16. Ebene
17. Erhebung
18. Schrägfläche
19. Übergangsbereich
20. Axialabschnitt
21. Neigungsabschnitt
22. Schaft
23. vertiefter Randabschnitt
24. erhöhter Randabschnitt
25. Gehäuserohling
26. Verdickung
27. Gehäuseaußenkontur
28. Gehäuseinnenkontur
29. Werkzeug
30. Ausnehmung
31. Dichtungsbalg
32. Dichtungsbalgrand
33. Lagerschalenabschnitt mit geringem Materialquerschnitt Fortsetzung Bezugszeichenliste
34. Tasche
35. Anlageschulter
36. Presswerkzeug

## Patentansprüche

1. Kugelgelenk mit einem Gelenkgehäuse (1), das einen für die Lagerung der Gelenkkugel (2) eines Kugelzapfens (3) angepassten Innenraum (4) sowie einseitig eine Öffnung (5) zur Durchführung der Gelenkkugel (2) umfasst, wobei die Gelenkkugel einen sich anschließenden Zapfenabschnitt (6) des Kugelzapfens (3) aufweist,
- mit einem an der Außenmantelfläche des Gehäuses (1) vorhandenen Anlagebereich (7) zur dichtenden Befestigung eines Dichtungsbalgrandes (8) eines Dichtungsbalges (31),
- mit einem einstückig am Gehäuse (1) gebildeten Gelenkverschluss (9), zur dreh- und schwenkbeweglichen Fixierung der Gelenkkugel (2) des Kugelzapfens (3) in dem Innenraum (4), wobei
der Gelenkverschluss (9) durch Kaltumformung eines umlaufenden Umformabschnitts (9) des Gehäuses (1) in Richtung des Mittelpunkts (M) der Gelenkkugel (2) hin gebildet ist, **dadurch gekennzeichnet, dass** das Gelenkgehäuse (1) insgesamt durch ein Kaltumformverfahren hergestellt ist, dass
das während dieses Kaltumformverfahrens verschobene Material nach der Fertigstellung des Gehäuses (1) den Umformabschnitt (9) des Gehäuses (1) bildet, und dass
die Öffnung (5) als Langloch durch Umformung des Umformabschnitts (9) des Gehäuses (1) gebildet ist, wobei
der Umformabschnitt (9) zwei einander diametral gegenüberliegende, vertiefte Randabschnitte (23) und zwischen den vertieften Randabschnitten (23) jeweils erhöhte Randabschnitte (24) aufweist.

2. Kugelgelenk nach Anspruch 1, **dadurch gekennzeichnet, dass** der Umformabschnitt (9) vor der Umformung die Geometrie eines hohlen Kreiszylinders, Kegels oder Konus aufweist.

3. Kugelgelenk nach einem der vorstehend genannten Ansprüche, **dadurch gekennzeichnet, dass**
der Gelenkverschluss (9) eine im wesentlichen sphäroide Gestalt aufweist.

4. Kugelgelenk nach einem der vorstehend genannten Ansprüche, **dadurch gekennzeichnet, dass**
das Gehäuse (1) an seiner der Öffnung (5) gegenüberliegenden Unterseite (10) eine Werkzeugauflagefläche (11) aufweist.

5. Kugelgelenk nach einem der vorstehend genannten Ansprüche, **dadurch gekennzeichnet, dass**
das Gehäuse (1) an seiner der Öffnung (5) gegenüberliegenden Unterseite (10) einen Justierflansch (12) aufweist, der durch mittels durch Kaltumformung verschobenen Materials gebildet ist, wobei der Justierflansch (12) als ringförmige, kreisförmige oder polygonale Erhebung ausführbar ist.

6. Kugelgelenk nach einem der vorstehend genannten Ansprüche, **dadurch gekennzeichnet, dass**
in den Innenraum (4) des Gehäuses (1) eine Lagerschale (13) einsetzbar ist, wobei die Lagerschale (13) im Wesentlichen eine konstante Wandstärke und bereits vor der Montage des Kugelgelenkes insgesamt eine sphäroide Gestalt aufweist.

7. Kugelgelenk nach einem der vorstehend genannten Ansprüche,
**dadurch gekennzeichnet, dass**
in dem Innenraum (4) des Gehäuses (1) zumindest eine Erhebung (17) als Verdrehsicherung für die Lagerschale (13) vorhanden ist.

8. Kugelgelenk nach einem der vorstehend genannten Ansprüche,
**dadurch gekennzeichnet, dass**
der Umformabschnitt (9) des Gehäuses (1) einen im Vergleich zu dem Anlagebereich (7) für den Dichtungsbalgrand (8) geringeren Materialquerschnitt aufweist.

9. Kugelgelenk nach einem der vorstehend genannten Ansprüche,
**dadurch gekennzeichnet, dass**
der Umformabschnitt (9) des Gehäuses (1) nach seiner Umformung eine den Rand der Öffnung (5) bildende Schrägfläche (18) aufweist, die mit der Geometrie des Zapfenabschnittes (6) des Kugelzapfens (3) in diesem Bereich korrespondiert.

10. Kugelgelenk nach einem der vorstehend genannten Ansprüche,
**dadurch gekennzeichnet, dass**
zwischen dem Umformabschnitt (9) und dem Anlagebereich (7) ein Übergangsbereich (19) vorhanden ist, der durch wenigstens einen Radius gebildet ist.

11. Kugelgelenk nach Anspruch 9,
**dadurch gekennzeichnet, dass**
der Übergangsbereich (19) durch mehrere, fließend ineinander übergehende Radien gebildet ist.

12. Kugelgelenk nach einem der vorstehend genannten Ansprüche,
**dadurch gekennzeichnet, dass**
der Anlagebereich (7) für den Dichtungsbalgrand (8) eine kreiszylindrische, kegelige oder konische Form aufweist.

13. Verfahren zur Herstellung eines Kugelgelenks nach einem der vorhergehenden Ansprüche, **gekennzeichnet durch** folgende Verfahrensschritte:
- Herstellung des einstückigen kaltumgeformten Gelenkgehäuses (1),
- Formung einer Gehäuseinnenkontur (28) **durch** Kaltumformung, wobei das **durch** das Kaltumformverfahren verschobene Material den Anlagebereich (7) und den Umformabschnitt (9) bildet,
- Einsetzen der Gelenkkugel (2) des Kugelzapfens in den Innenraum (4),
- Bilden des Gelenkverschlusses (9) **durch** Kaltumformung des umlaufenden Umformabschnitts (9) nach dem Einsetzen der Gelenkkugel (2).

## Claims

1. Ball joint having a joint housing (1), which comprises an inner space (4) adapted for housing the joint ball (2) of a ball pin (3) and also an opening (5) on one side for the passage of the joint ball (2), wherein the joint ball has an adjoining pin portion (6) of the ball pin (3),
- having a contact region (7), present on the outer lateral surface of the housing (1), for fastening a sealing boot edge (8) of a sealing boot (31) in a sealing manner,
- having a joint closure (9), formed in one piece on the housing (1), for fixing the joint ball (2) of the ball pin (3) in a rotatable and pivotable manner in the inner space (4), wherein
the joint closure (9) is formed by cold-forming a circumferential forming portion (9) of the housing (1) in the direction of the midpoint (M) of the joint ball (2), **characterized in that** the joint housing (1) is produced as a whole by a cold-forming method, **in that**,
after the housing (1) has been finished, the material displaced during this cold-forming method forms the forming portion (9) of the housing (1), and **in that**
the opening (5) is formed as an elongated hole by forming the forming portion (9) of the housing (1), wherein
the forming portion (9) has two recessed edge portions (23) lying diametrically opposite one another and, between the recessed edge portions (23), in each case raised edge portions (24).

2. Ball joint according to Claim 1, **characterized in that**
the forming portion (9) has the geometry of a hollow circular cylinder, a taper or a cone before the forming.

3. Ball joint according to either of the preceding claims, **characterized in that**
the joint closure (9) has a substantially spheroidal shape.

4. Ball joint according to one of the preceding claims, **characterized in that**
the bottom side (10) of the housing (1), which lies opposite the opening (5), has a tool contact surface (11).

5. Ball joint according to one of the preceding claims, **characterized in that**
the bottom side (10) of the housing (1), which lies opposite the opening (5), has an adjustment flange (12) which is formed by means of material displaced by cold-forming, wherein the adjustment flange (12) can be embodied as an annular, circular or polygonal elevation.

6. Ball joint according to one of the preceding claims, **characterized in that**
a bearing shell (13) can be inserted into the inner space (4) of the housing (1), wherein the bearing shell (13) has substantially a constant wall thickness and overall a spheroidal shape already before the ball joint is mounted.

7. Ball joint according to one of the preceding claims, **characterized in that**
at least one elevation (17) is present in the inner space (4) of the housing (1) for preventing the rotation of the bearing shell (13).

8. Ball joint according to one of the preceding claims, **characterized in that**
the forming portion (9) of the housing (1) has a smaller material cross section in comparison to the contact region (7) for the sealing boot edge (8).

9. Ball joint according to one of the preceding claims, **characterized in that**,
after it has been formed, the forming portion (9) of the housing (1) has an inclined surface (18), which forms the edge of the opening (5) and corresponds to the geometry of the pin portion (6) of the ball pin (3) in this region.

10. Ball joint according to one of the preceding claims, **characterized in that**
a transition region (19) formed by at least one radius is present between the forming portion (9) and the contact region (7).

11. Ball joint according to Claim 9, **characterized in that**
the transition region (19) is formed by a plurality of radii which merge smoothly into one another.

12. Ball joint according to one of the preceding claims, **characterized in that**
the contact region (7) for the sealing boot edge (8) has a circular-cylindrical, tapered or conical shape.

13. Method for producing a ball joint according to one of the preceding claims, **characterized by** the following method steps:
- producing the integral cold-formed joint housing (1),
- shaping a housing inner contour (28) by cold-forming, wherein the material displaced by the cold-forming method forms the contact region (7) and the forming portion (9),
- inserting the joint ball (2) of the ball pin into the inner space (4),
- forming the joint closure (9) by cold-forming the circumferential forming portion (9) after the joint ball (2) has been inserted.

## Revendications

1. Joint à rotule avec un carter de rotule (1) comprenant un espace intérieur (4) adapté pour le positionnement de la sphère de rotule (2) à un tenon de sphère (3) ainsi qu'unilatéralement une ouverture (5) servant au passage de la sphère de rotule (2), la sphère de rotule comportant une section de tenon (6) rattachée du tenon de sphère (3) ;
- avec une zone d'appui (7) présente au niveau de la surface d'enveloppe extérieure du carter (1) pour fixer de façon étanche un bord de soufflet d'étanchéité (8) d'un soufflet d'étanchéité (31) ;
- avec une fermeture de rotule (9) formée d'un seul tenant au niveau du carter (1), pour la fixation mobile en rotation et pivotement de la sphère de rotule (2) du tenon de sphère (3) dans l'espace intérieur (4) ;
la fermeture de rotule (9) étant formée par transformation à froid d'une section de transformation (9) périphérique du carter (1) en direction du point central (M) de la sphère de rotule (2) ;
**caractérisé en ce que** :
le carter de rotule (1) est entièrement fabriqué par le biais d'un procédé de transformation à froid ;
pendant ce procédé de transformation à froid, la matière déplacée forme après la position de fabrication du carter (1) la section de transformation (9) du carter (1) ; et
l'ouverture (5) prend la forme d'un trou oblong par transformation de la section de transformation (9) du carter (1) ;
la section de transformation (9) comportant deux sections de bordure (23) creusées diamétralement opposées et respectivement des sections de bordure (24) surélevées entre les sections de bordure (23) creusées.

2. Joint à rotule selon la revendication 1, **caractérisé en ce que** la section de transformation (9) présente avant la transformation la forme géométrique d'un cylindre circulaire creux, d'une quille ou d'un cône.

3. Joint à rotule selon l'une quelconque des revendications précédentes, **caractérisé en ce que** la fermeture de rotule (9) prend une forme pour l'essentiel sphéroïde.

4. Joint à rotule selon l'une quelconque des revendications précédentes, **caractérisé en ce que** le carter (1) comporte une surface portante d'outil (11) au niveau de son côté inférieur (10) opposé à l'ouverture (5).

5. Joint à rotule selon l'une quelconque des revendications précédentes, **caractérisé en ce que** le carter (1) comporte au niveau de son côté inférieur (10) opposé à l'ouverture (5) une bride d'ajustement (12) formée à l'aide de matière déplacée par transformation à froid, la bride d'ajustement (12) pouvant prendre la forme d'une partie relevée annulaire, circulaire ou polygonale.

6. Joint à rotule selon l'une quelconque des revendications précédentes, **caractérisé en ce qu'**une coque de coussinet (13) peut être insérée dans l'espace intérieur (4) du carter (1), la coque de coussinet (13) comportant pour l'essentiel une épaisseur de paroi constante et présentant une forme entièrement sphéroïde déjà avant le montage du joint à rotule.

7. Joint à rotule selon l'une quelconque des revendications précédentes, **caractérisé en ce qu'**au moins une partie relevée (17) prenant la forme d'une protection anti-torsion pour la coque de coussinet (13) est présente dans l'espace intérieur (4) du carter (1).

8. Joint à rotule selon l'une quelconque des revendications précédentes, **caractérisé en ce que** la section de transformation (9) du carter (1) présente une section transversale de matière davantage réduite par rapport à la zone d'appui (7) du bord de soufflet d'étanchéité (8).

9. Joint à rotule selon l'une quelconque des revendications précédentes, **caractérisé en ce que** la section de transformation (9) du carter (1) comporte après la transformation une surface oblique (18) formant le bord de l'ouverture (5) et correspondant à la forme géométrique de la section de tenon (6) du tenon de sphère (3) dans cette région.

10. Joint à rotule selon l'une quelconque des revendications précédentes, **caractérisé en ce qu'**une région de transition (19) formée par au moins un rayon est présente entre la section de transformation (9) et la zone d'appui (7).

11. Joint à rotule selon la revendication 9, **caractérisé en ce que** la région de transition (19) est formée par plusieurs rayons se transformant de façon fluide les uns dans les autres.

12. Joint à rotule selon l'une quelconque des revendications précédentes, **caractérisé en ce que** la zone d'appui (7) présente une forme de cylindre de cercle, de quille ou de cône pour le bord de soufflet d'étanchéité (8).

13. Procédé de fabrication d'un joint à rotule selon l'une quelconque des revendications précédentes, **caractérisé par** les étapes de procédé suivantes :
- fabrication du carter de rotule (1) réalisé d'un seul tenant et transformé à froid ;
- moulage d'un contour intérieur de carter (28) par transformation à froid, la matière déplacée par le procédé de transformation à froid formant la zone d'appui (7) et la section de transformation (9) ;
- insertion de la sphère de rotule (2) du tenon de sphère dans l'espace intérieur (4) ;
- formation de la fermeture de rotule (9) par transformation à froid de la section de transformation (9) périphérique après l'insertion de la sphère de rotule (2).
